(19) Europäisches Patentamt
European Patent Office
Office européen des brevets

(11) Veröffentlichungsnummer: **0 392 359 B1**

(12) # EUROPÄISCHE PATENTSCHRIFT

(45) Veröffentlichungstag der Patentschrift: **01.12.93**

(51) Int. Cl.[5]: **C09B 67/22**, C09B 29/033, //D06P3/52,D06P1/18

(21) Anmeldenummer: **90106524.3**

(22) Anmeldetag: **05.04.90**

(54) **Neue marineblaue und schwarze Farbstoffmischungen.**

(30) Priorität: **12.04.89 DE 3911949**

(43) Veröffentlichungstag der Anmeldung:
**17.10.90 Patentblatt 90/42**

(45) Bekanntmachung des Hinweises auf die Patenterteilung:
**01.12.93 Patentblatt 93/48**

(84) Benannte Vertragsstaaten:
**CH DE FR GB IT LI**

(56) Entgegenhaltungen:
**EP-A- 0 166 566**
**EP-A- 0 201 896**
**EP-A- 0 311 910**
**US-A- 4 472 169**

(73) Patentinhaber: **BASF Aktiengesellschaft**
**Carl-Bosch-Strasse 38**
**D-67063 Ludwigshafen(DE)**

(72) Erfinder: **Hahn, Erwin, Dr.**
**Am Buechsenackerhang 31**
**D-6900 Heidelberg(DE)**
Erfinder: **Hansen, Guenter Dr.**
**Alwin-Mittasch-Platz 8**
**D-6700 Ludwigshafen(DE)**
Erfinder: **Etzbach, Karl-Heinz, Dr.**
**Carl-Bosch-Ring 55**
**D-6710 Frankenthal(DE)**
Erfinder: **Reichelt, Helmut, Dr.**
**Johann-Gottlieb-Fichte-Strasse 56**
**D-6730 Neustadt(DE)**
Erfinder: **Schefczik, Ernst, Dr.**
**Dubliner Strasse 7**
**D-6700 Ludwigshafen(DE)**
Erfinder: **Degen, Helmut**
**Wildstrasse 32**
**D-6710 Frankenthal(DE)**
Erfinder: **Krallmann, Reinhold**
**Bachweg 2**
**D-6719 Weisenheim(DE)**
Erfinder: **Wagenblast, Gerhard, Dr.**
**Hanns-Fay-Strasse 3**
**D-6710 Frankenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 392 359 B1

## Beschreibung

Die vorliegende Erfindung betrifft neue marineblaue und schwarze Farbstoffmischungen, enthaltend einen oder mehrere Thiophenazofarbstoffe der Formel

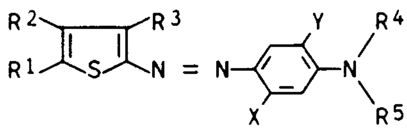

,

in der

- $R^1$ Formyl, Cyano oder Phenylsulfonyl,
- $R^2$ Halogen, $C_1$-$C_8$-Alkoxy, gegebenenfalls substituiertes Phenoxy, $C_1$-$C_6$-Alkylthio,Phenylthio, $C_1$-$C_4$-Alkylsulfonyl oder Phenylsulfonyl,
- $R^3$ Cyano, $C_1$-$C_6$-Alkoxycarbonyl, dessen Alkylkette gegebenenfalls durch ein oder mehrere Sauerstoffatome unterbrochen ist, Carbamoyl oder $C_1$-$C_4$-Mono- oder Dialkylcarbamoyl,
- $R^4$ $C_1$-$C_6$-Alkyl, das gegebenenfalls durch Hydroxy, $C_1$-$C_4$-Alkoxy, Cyano, $C_1$-$C_4$-Alkanoyloxy, $C_1$-$C_4$-Alkoxycarbonyloxy, $C_1$-$C_4$-Alkylaminocarbonyloxy, Phenyl, $C_1$-$C_4$-Alkoxycarbonyl oder durch Chlor, Hydroxy, $C_1$-$C_4$-Alkoxy oder Phenoxy substituiertes $C_1$-$C_4$-Alkoxycarbonyl substituiert ist,
- $R^5$ Wasserstoff oder $C_1$-$C_6$-Alkyl, das durch Phenyl, $C_1$-$C_4$-Alkoxycarbonyl oder durch Chlor, Hydroxy, $C_1$-$C_4$-Alkoxy oder Phenoxy substituiertes $C_1$-$C_4$-Alkoxycarbonyl substituiert ist,
- X Wasserstoff, $C_1$-$C_4$-Alkyl, $C_1$-$C_4$-Alkoxy, Chlor, Brom oder den Rest -NH-CO-$R^6$, wobei $R^6$ für $C_1$-$C_4$-Alkyl, das durch $C_1$-$C_4$-Alkoxy, Phenoxy, Cyano, Hydroxy, Chlor oder $C_1$-$C_4$-Alkanoyloxy substituiert sein kann, oder für gegebenenfalls durch $C_1$-$C_4$-Alkoxy substituiertes Phenoxy steht, und
- Y Wasserstoff, $C_1$-$C_4$-Alkyl oder $C_1$-$C_4$-Alkoxy bedeuten, und

einen oder mehrere Farbstoffe F, deren Absorptionsmaximum bei einer Wellenlänge von 390 bis 520 nm liegt, wobei der Anteil der Thiophenazofarbstoffe 60 bis 99 Gew.%, bezogen auf das Gesamtgewicht der Thiophenazofarbstoffe und der Farbstoffe F in der Mischung, beträgt,
wobei Farbstoffmischungen, enthaltend

a) die Farbstoffe

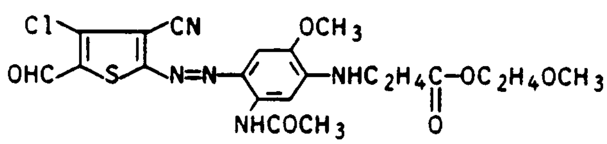

,

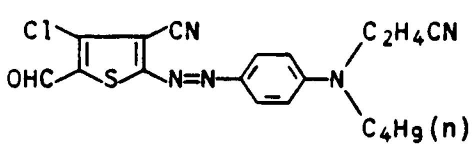

und C.I. Disperse Red 54 : 1 im Gewichtsverhältnis 33 : 4,25 : 2,75,

b) die Farbstoffe

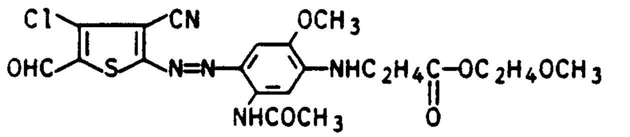

,

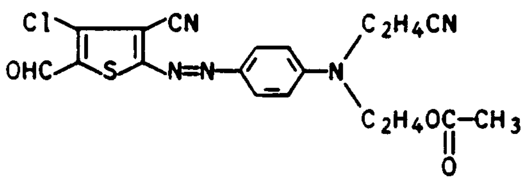

und C.I. Disperse Red 54 : 1 im Gewichtsverhältnis 31 : 6,3 : 2,7,
c) die Farbstoffe

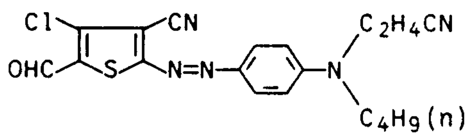

,

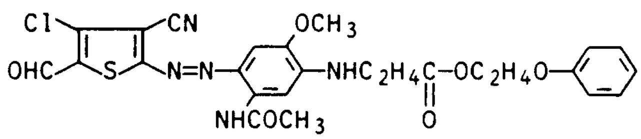

und C.I. Disperse Red 167 : 1 im Gewichtsverhältnis 6,25 : 33,2 : 0,55 sowie
d) die Farbstoffe

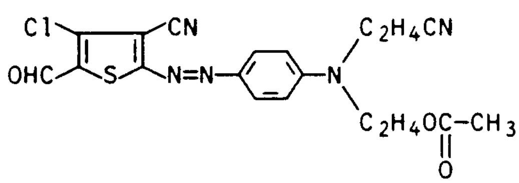

,

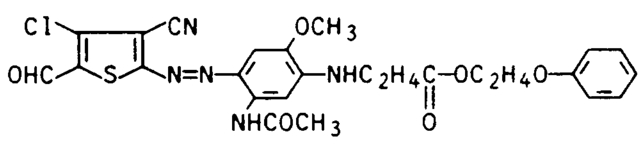

und C.I. Disperse Red 167 : 1 im Gewichtsverhältnis 8 : 31,6 : 0,4, ausgenommen sind.

Ähnliche Farbstoffmischungen sind in der älteren Anmeldung EP-A-311 910 beschrieben.

Die in den neuen Mischungen enthaltenen Thiophenazofarbstoffe sind an sich bekannt und z.B. in der EP-A-201 896 beschrieben. Sie ergeben auf Polyester Ausfärbungen in brillanten violetten bis blaugrünen Farbtönen.

Aufgabe der vorliegenden Erfindung war es, Farbstoffmischungen bereitzustellen, die auf Polyester Ausfärbungen in marineblauen bis schwarzen Farbtönen ergeben.

Demgemäß wurden die eingangs näher bezeichneten Farbstoffmischungen gefunden, wobei überraschend war, daß man durch Mischen der genannten Thiophenazofarbstoffe mit gelben und/oder orangen und/oder roten Farbstoffen marineblaue und schwarze Farbtöne erreichen kann.

Alle in der obengenannten Formel, betreffend die Thiophenazofarbstoffe, auftretenden Alkylgruppen können sowohl geradkettig als auch verzweigt sein.

Wenn in der Formel der Thiophenazofarbstoffe substituierte Phenylgruppen auftreten, kommen als Substituenten, sofern nicht anders vermerkt, z.B. $C_1$-$C_4$-Alkyl, $C_1$-$C_4$-Alkoxy oder Halogen in Betracht.

Wenn in der Formel der Thiophenazofarbstoffe Alkylreste auftreten, die durch ein oder mehrere Sauerstoffatome unterbrochen sind, sind solche Reste bevorzugt, die durch ein oder zwei Sauerstoffatome unterbrochen sind.

Wenn in der Formel der Thiophenazofarbstoffe substituierte Alkylgruppen auftreten, so können diese ein- oder zweifach substituiert sein, wobei die Substituenten gleich oder verschieden sind.

$R^2$, X und Y bedeuten beispielsweise Methoxy, Ethoxy, Propoxy, Isopropoxy, Butoxy, Isobutoxy oder sec-Butoxy.

$R^2$ bedeutet weiterhin z.B. Pentyloxy, Isopentyloxy, Neopentyloxy, tert-Pentyloxy, Hexyloxy, Heptyloxy, Octyloxy, 2-Ethylhexyloxy, Fluor, Chlor, Brom, Phenoxy, 2-Chlorphenoxy, 4-Chlorphenoxy, 4-Methylphenoxy, 4-Methoxyphenoxy, Methylthio, Ethylthio, Propylthio, Isopropylthio, Butylthio, Isobutylthio, Pentylthio, Isopentylthio, Hexylthio, Methylsulfonyl, Ethylsulfonyl, Propylsulfonyl, Isopropylsulfonyl oder Butylsulfonyl.

X und Y bedeuten weiterhin, ebenso wie $R^4$, z.B. Methyl, Ethyl, Propyl, Isopropyl, Butyl, Isobutyl, sec-Butyl oder tert-Butyl.

$R^3$ bedeutet z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl, tert-Pentyloxycarbonyl, Hexyloxycarbonyl, 2-Methoxyethoxycarbonyl, 2-Ethoxyethoxycarbonyl, 2-Propoxyethoxycarbonyl, 2-Butoxyethoxycarbonyl, 2- oder 3-Methoxypropoxycarbonyl, 2- oder 3-Ethoxypropoxycarbonyl, 3,6-Dioxaheptyloxycarbonyl, 3,6-Dioxaoctyloxycarbonyl, Methylcarbamoyl, Ethylcarbamoyl, Propylcarbamoyl, Isopropylcarbamoyl, Butylcarbamoyl, Dimethylcarbamoyl, Diethylcarbamoyl, Dipropylcarbamoyl, Dibutylcarbamoyl oder N-Methyl-N-ethylcarbamoyl.

$R^4$ bedeutet weiterhin z.B. Pentyl, Isopentyl, Neopentyl, tert-Pentyl, Hexyl, 2-Hydroxyethyl, 2- oder 3-Hydroxypropyl, 4-Hydroxybutyl, 5-Hydroxypentyl, 6-Hydroxyhexyl, 2-Methoxyethyl, 2-Ethoxyethyl, 2-Propoxyethyl, 2-Butoxyethyl, 2-Cyanoethyl, 2-Formyloxyethyl, 2-Acetyloxyethyl, 2-Propionyloxyethyl, 2-Butyryloxyethyl, 4-Acetyloxybutyl, 2-Methoxycarbonyloxyethyl, 2-Methylaminocarbonyloxyethyl, 2-Ethylaminocarbonyloxyethyl, 2-Propylaminocarbonyloxyethyl oder 2-Butylaminocarbonyloxyethyl.

$R^4$ und $R^5$ bedeuten weiterhin z.B. Benzyl, 1- oder 2-Phenylethyl, 2-Methoxycarbonylethyl, 2-Ethoxycarbonylethyl, 2-Propoxycarbonylethyl, 2-Isopropoxycarbonylethyl, 2-Butoxycarbonylethyl, 2-Isobutoxycarbonylethyl, 2-sec-Butoxycarbonylethyl, 2-(2-Chlorethoxycarbonyl)ethyl, 2-(2-Hydroxyethoxycarbonyl)ethyl, 2-(2-Methoxyethoxycarbonyl)ethyl, 2-(2-Ethoxyethoxycarbonyl)ethyl, 2-(2-Propoxyethoxycarbonyl)ethyl, 2-(2-Isopropxycarbonyl)ethyl, 2-(2-Butoxyethoxycarbonyl)ethyl oder 2-(2-Phenoxyethoxycarbonyl)ethyl.

Wenn X für den Rest NH-CO-$R^6$ steht, bedeutet $R^6$ beispielsweise Methyl, Ethyl, Propyl, Isopropyl, Butyl, Methoxymethyl, Ethoxymethyl, 1- oder 2-Methoxyethyl, 1- oder 2-Ethoxyethyl, Phenoxymethyl, 1- oder 2-Phenoxyethyl, Cyanomethyl, 2-Cyanoethyl, 3-Cyanopropyl, 4-Cyanobutyl, Hydroxymethyl, 1- oder 2-Hydroxyethyl, 2- oder 3-Hydroxypropyl, 4-Hydroxybutyl, Chlormethyl, 2-Chlorethyl, Formyloxymethyl, Acetyloxymethyl, 2-Formyloxyethyl, 2-Acetyloxyethyl, 2-Propionyloxyethyl, 2-Butyryloxyethyl, 3-Formyloxypropyl, 4-Acetyloxybutyl, Phenoxy, 2-Methoxyphenoxy, 4-Methoxyphenoxy, 4-Ethoxyphenoxy oder 4-Isopropoxyphenoxy.

Farbstoffe F, die ein Absorptionsmaximum bei einer Wellenlänge von 390 bis 520 nm aufweisen, stammen beispielsweise aus der Klasse der Mono- oder Disazofarbstoffe, Anthrachinone, Methinfarbstoffe, Chinophthalone, Naphtholactamfarbstoffe, Cumarinfarbstoffe oder Diphenylaminfarbstoffe.

Farbstoffe F, die aus der Klasse der Mono- oder Disazofarbstoffe stammen, sind beispielsweise C.I. Disperse Yellow 3 (11 855), C.I. Disperse Yellow 5 (12 790), C.I. Disperse Yellow 7 (26 090), C.I. Disperse Yellow 60 (12 712), C.I. Disperse Yellow 103, C.I. Disperse Yellow 114, C.I. Disperse Yellow 119, C.I. Disperse Yellow 126, C.I. Disperse Yellow 163, C.I. Disperse Yellow 180, C.I. Disperse Yellow 181, C.I. Disperse Yellow 182, C.I. Disperse Yellow 183, C.I. Disperse Yellow 198, C.I. Disperse Yellow 204, C.I. Disperse Yellow 211, C.I. Disperse Yellow 218, C.I. Disperse Yellow 223, C.I. Disperse Yellow 224, C.I. Disperse Yellow 227, C.I. Disperse Yellow 230, C.I. Disperse Yellow 231, C.I. Disperse Yellow 235, C.I. Disperse Orange 3 (11 005), C.I. Disperse Orange 13 (26 080), C.I. Disperse Orange 29 (26 077), C.I. Disperse Orange 30 (11 119), C.I. Disperse Orange 31, C.I. Disperse Orange 49, C.I. Disperse Orange 53, C.I. Disperse Orange 55, C.I. Disperse Orange 85, C.I. Disperse Orange 139, C.I. Disperse Orange 149, C.I. Disperse Orange 151, C.I. Disperse Red 50, C.I. Disperse Red 54:1, C.I. Disperse Red 65 (11 228), C.I. Disperse Red 72 (11 114), C.I. Disperse Red 74, C.I. Disperse Red 135, C.I. Disperse Red 167, C.I. Disperse Red 167:1, C.I. Disperse Red 184, C.I. Disperse Red 203, C.I. Disperse Red 224 oder C.I. Disperse Red 279. (Bei diesen Namen, wie auch bei den folgenden, handelt es sich um die gebräuchlichen Colour Index-Bezeichnungen der Farbstoffe.)

Farbstoffe F, die aus der Klasse der Anthrachinone stammen, sind beispielsweise C.I. Disperse Yellow 51, C.I. Disperse Orange 11 (60 700), C.I. Disperse Red 60 (60 756), C.I. Disperse Red 91 oder C.I. Disperse Red 92.

Farbstoffe F, die aus der Klasse der Methinfarbstoffe stammen, sind beispielsweise C.I. Disperse Yellow 12, C.I. Disperse Yellow 31 (48 000), C.I. Disperse Yellow 49, C.I. Disperse Yellow 61 (48 005), C.I. Disperse Yellow 88, C.I. Disperse Yellow 89, C.I. Disperse Yellow 90 (48 007), C.I. Disperse Yellow 93, C.I. Disperse Yellow 99 (48 420), C.I. Disperse Yellow 109, C.I. Disperse Yellow 116, C.I. Disperse Yellow 118, C.I. Disperse Yellow 124, C.I. Disperse Yellow 125, C.I. Disperse Yellow 131, C.I. Disperse Yellow 138, C.I. Disperse Yellow 142, C.I. Disperse Yellow 200, C.I. Disperse Yellow 201, C.I. Disperse Yellow 210 oder C.I. Disperse Orange 47.

Farbstoffe, die aus der Klasse der Chinophthalone stammen, sind beispielsweise C.I. Disperse Yellow 54 (47 020)oder C.I. Disperse Yellow 64 (47 023).

Farbstoffe, die aus der Klasse der Cumarine stammen, sind beispielsweise C.I. Disperse Yellow 82 oder C.I. Disperse Yellow 216.

Ein Farbstoff aus der Klasse der Naphtholactame ist beispielsweise C.I. Disperse Yellow 215.

Farbstoffe, die aus der Klasse der Diphenylamine stammen, sind beispielsweise C.I. Disperse Yellow 1 (10 345), C.I. Disperse Yellow 9 (10 375), C.I. Disperse Yellow 14 (10 340), C.I. Disperse Yellow 17 (10 349), C.I. Disperse Yellow 33 (10 337), C.I. Disperse Yellow 34, C.I. Disperse Yellow 42 (10 338), C.I. Disperse Yellow 59, C.I. Disperse Yellow 86 oder C.I. Disperse Orange 15 (10 350).

Farbstoffe F sind weiterhin z.B. C.I. Disperse Yellow 83 oder C.I. Disperse Orange 72.

Bevorzugt sind Farbstoffmischungen, die solche Farbstoffe F enthalten, die ein Absorptionsmaximum bei einer Wellenlänge von 400 bis 520 nm und insbesondere von 410 bis 520 nm aufweisen.

Weiterhin bevorzugt sind Farbstoffmischungen, die einen oder mehrere Thiophenazofarbstoffe der obengenannten Formel enthalten, in der $R^1$ Formyl, $R^2$ Chlor und $R^3$ Cyano oder $C_1$-$C_4$-Alkoxycarbonyl bedeuten.

Weiterhin bevorzugt sind Farbstoffmischungen, die einen oder mehrere Farbstoffe F, die aus der Klasse der Mono- oder Disazofarbstoffe oder der Chinophthalonfarbstoffe stammen, enthalten.

Besonders wichtige marineblaue und schwarze Farbstoffmischungen sind solche, die als Farbstoffe F C.I. Disperse Yellow 64, C.I. Disperse Yellow 114, C.I. Disperse Yellow 198, C.I. Disperse Orange 13, C.I. Disperse Orange 29, C.I. Disperse Orange 30, C.I. Disperse Orange 49, C.I. Disperse Red 54:1, C.I. Disperse Red 135 oder C.I. Disperse Red 167:1 enthalten.

In den erfindungsgemäßen Farbstoffmischungen soll der Anteil der Thiophenazofarbstoffe 60 bis 99 Gew.%, bezogen auf das Gesamtgewicht der Thiophenazofarbstoffe und der Farbstoffe F in der Mischung, betragen. Bevorzugt sind dabei solche Farbstoffmischungen, in denen der Anteil der Thiophenazofarbstoffe 65 bis 99 Gew.%, bezogen auf das Gesamtgewicht der Thiophenazofarbstoffe und der Farbstoffe F in der Mischung, beträgt. Der Anteil der Farbstoffe F liegt folglich bei 1 bis 40 Gew.%, vorzugsweise 1 bis 35 Gew.%, jeweils bezogen auf das Gesamtgewicht der Thiophenazofarbstoffe und der Farbstoffe F in der Mischung. Diese Angaben beziehen sich jeweils nur auf die Farbstoffe, d.h. gegebenenfalls anwesende andere Komponenten sind dabei nicht berücksichtigt.

Die Herstellung der erfindungsgemäßen Farbstoffmischungen erfolgt durch Mischen der jeweiligen Partner im genannten Gewichtsverhältnis. Gegebenenfalls können den neuen Mischungen weitere Komponenten, z.B. Dispergiermittel, zugesetzt werden. Es ist auch möglich, bereits fertige Farbstoffpräparationert der jeweiligen Partner abzumischen.

Die neuen marineblauen und schwarzen Farbstoffmischungen eignen sich zum Färben und Bedrucken von Polyestergeweben. Man erhält dabei Ausfärbungen und Drucke in marineblauen bis schwarzen Tönen, die sich durch eine hohe Lichtechtheit auszeichnen.

Die Färbe- und Druckverfahren sind an sich bekannt. Nähere Einzelheiten können auch den Beispielen entnommen werden.

Ein weiterer Vorteil der erfindungsgemäßen Farbstoffmischungen liegt in ihrer arbeitsplatzhygienischen Unbedenklichkeit.

Die folgenden Beispiele sollen die Erfindung näher erläutern.

Färbevorschrift

10 g Polyestergewebe werden bei einer Temperatur von 60 °C in 200 ml einer Färbeflotte gegeben, die Z Gew.% Farbstoffmischung, bezogen auf das Polyestergewebe, enthält und deren pH-Wert mittels Essigsäure auf 4,5 eingestellt ist. Man behandelt 5 Minuten bei 60 °C, steigert dann die Temperatur der

Flotte innerhalb von 30 Minuten auf 135 °C, hält 60 Minuten bei dieser Temperatur und läßt dann innerhalb von 20 Minuten auf 60 °C abkühlen.

Danach wird das ausgefärbte Polyestergewebe reduktiv gereinigt, indem man es 15 Minuten in 200 ml einer Flotte, die 5 ml/l 32 gew.%ige Natronlauge, 3 g/l Natriumdithionit und 1 g/l eines Anlagerungsproduktes von 48 ml Ethylenoxid an 1 Mol Ricinusöl enthält, bei 65 °C behandelt. Schließlich wird das Gewebe gespült, mit verdünnter Essigsäure neutralisiert, nochmals gespült und getrocknet.

Die in der folgenden Tabelle aufgeführten Farbstoffmengen gelten für die Tiefe der Marineblaustufe 1.

| Bestandteile der Mischung [g] | Mischung Nr. 1 | 2 | 3 | 4 | 5 |
|---|---|---|---|---|---|
| 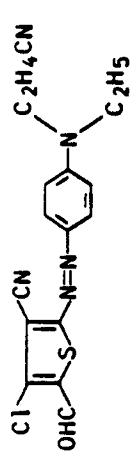 | 4,2 | 4,9 | 5,0 | 4,5 | 5,1 |
| 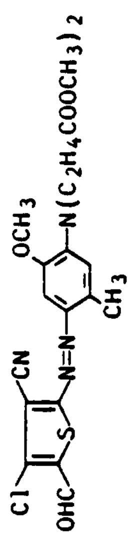 | 33,5 | - | - | - | - |
| 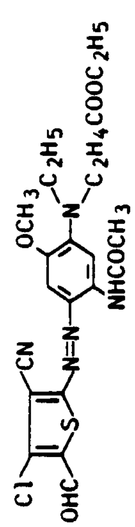 | - | 33,7 | - | - | - |
| 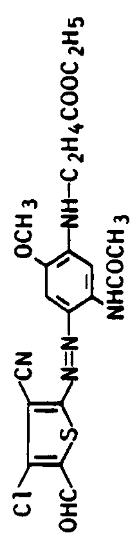 | - | - | 33,6 | - | - |

(Forts.)

| Bestandteile der Mischung [g] | Mischung Nr. 1 | 2 | 3 | 4 | 5 |
|---|---|---|---|---|---|
| 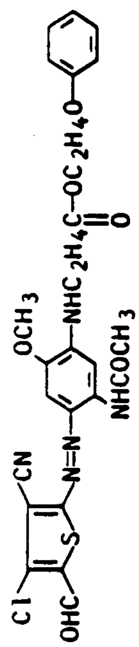 | - | - | - | 33,8 | - |
| 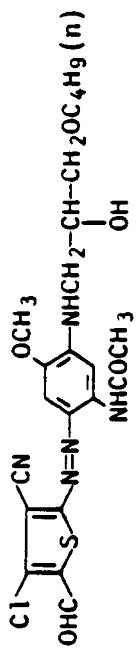 | - | - | - | - | 33,7 |
| C.I. Disperse Red 167:1 | - | 1,4 | 1,4 | 1,7 | 1,2 |
| C.I. Disperse Yellow 64 | 2,3 | - | - | - | - |
| Dispergiermittel auf Basis Ligninsulfonat | 60 | 60 | 60 | 60 | 60 |
| Verwendete Menge Z der Mischung [Gew.%, bezogen auf Polyestergewebe] | 2,70 | 3,00 | 3,70 | 3,50 | 3,40 |

## Patentansprüche

1. Marineblaue und schwarze Farbstoffmischungen, enthaltend einen oder mehrere Thiophenazofarbstoffe der Formel

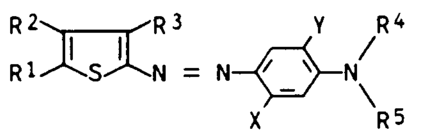

,

in der

- $R^1$ Formyl, Cyano oder Phenylsulfonyl,
- $R^2$ Halogen, $C_1$-$C_8$-Alkoxy, gegebenenfalls substituiertes Phenoxy, $C_1$-$C_6$-Alkylthio, Phenylthio, $C_1$-$C_4$-Alkylsulfonyl oder Phenylsulfonyl,
- $R^3$ Cyano, $C_1$-$C_6$-Alkoxycarbonyl, dessen Alkylkette gegebenenfalls durch ein oder mehrere Sauerstoffatome unterbrochen ist, Carbamoyl oder $C_1$-$C_4$-Mono- oder Dialkylcarbamoyl,
- $R^4$ $C_1$-$C_6$-Alkyl, das gegebenenfalls durch Hydroxy, $C_1$-$C_4$-Alkoxy, Cyano, $C_1$-$C_4$-Alkanoyloxy, $C_1$-$C_4$-Alkoxycarbonyloxy, $C_1$-$C_4$-Alkylaminocarbonyloxy, Phenyl, $C_1$-$C_4$-Alkoxycarbonyl oder durch Chlor, Hydroxy, $C_1$-$C_4$-Alkoxy oder Phenoxy substituiertes $C_1$-$C_4$-Alkoxycarbonyl substituiert ist,
- $R^5$ Wasserstoff oder $C_1$-$C_6$-Alkyl, das durch Phenyl, $C_1$-$C_4$-Alkoxycarbonyl oder durch Chlor, Hydroxy, $C_1$-$C_4$-Alkoxy oder Phenoxy substituiertes $C_1$-$C_4$-Alkoxycarbonyl substituiert ist,
- X Wasserstoff, $C_1$-$C_4$-Alkyl, $C_1$-$C_4$-Alkoxy, Chlor, Brom oder den Rest -NH-CO-$R^6$, wobei $R^6$ für $C_1$-$C_4$-Alkyl, das durch $C_1$-$C_4$-Alkoxy, Phenoxy, Cyano, Hydroxy, Chlor oder $C_1$-$C_4$-Alkanoyloxy substituiert sein kann, oder für gegebenenfalls durch $C_1$-$C_4$-Alkoxy substituiertes Phenoxy steht, und
- Y Wasserstoff, $C_1$-$C_4$-Alkyl oder $C_1$-$C_4$-Alkoxy bedeuten, und

einen oder mehrere Farbstoffe F, deren Absorptionsmaximum bei einer Wellenlänge von 390 bis 520 nm liegt, wobei der Anteil der Thiophenazofarbstoffe 60 bis 99 Gew.%, bezogen auf das Gesamtgewicht der Thiophenazofarbstoffe und der Farbstoffe F in der Mischung, beträgt, wobei Farbstoffmischungen, enthaltend

a) die Farbstoffe

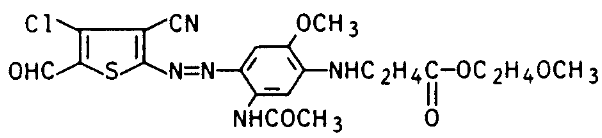
,

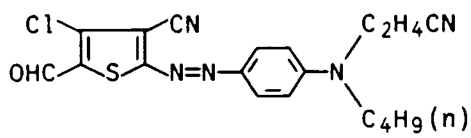

und C.I. Disperse Red 54 : 1 im Gewichtsverhältnis 33 : 4,25 : 2,75,

b) die Farbstoffe

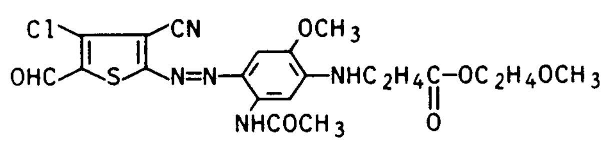
,

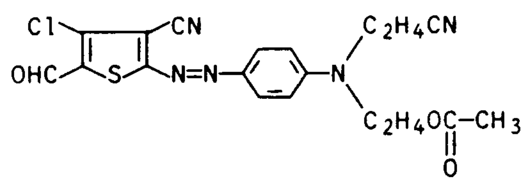

und C.I. Disperse Red 54 : 1 im Gewichtsverhältnis 31 : 6,3 : 2,7,

c) die Farbstoffe

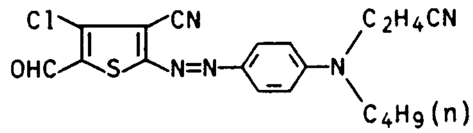

,

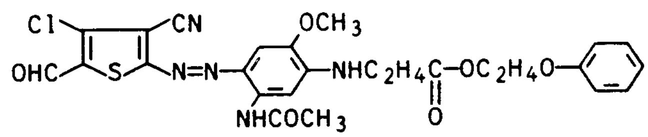

und C.I. Disperse Red 167 : 1 im Gewichtsverhältnis 6,25 : 33,2 : 0,55 sowie
d) die Farbstoffe

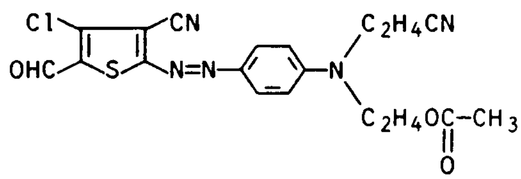

,

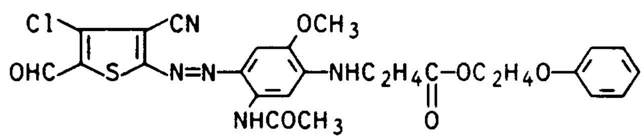

und C.I. Disperse Red 167 : 1 im Gewichtsverhältnis 8 : 31,6 : 0,4, ausgenommen sind.

**2.** Farbstoffmischungen gemäß Anspruch 1, dadurch gekennzeichnet, daß $R^1$ Formyl, $R^2$ Chlor und $R^3$ Cyano oder $C_1$-$C_4$-Alkoxycarbonyl bedeuten.

**3.** Farbstoffmischungen gemäß Anspruch 1, dadurch gekennzeichnet, daß sie als Farbstoffe F solche, die aus der Klasse der Mono- oder Disazofarbstoffe oder Chinophthalonfarbstoffe stammen, enthalten.

## Claims

**1.** A navy or black dye mixture comprising one or more thiopheneazo dyes of the formula

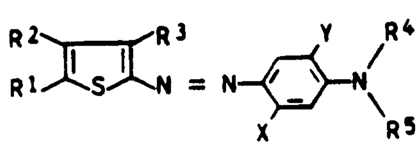

where

$R^1$ is formyl, cyano or phenylsulfonyl,

$R^2$ is halogen, $C_1$-$C_8$-alkoxy, substituted or unsubstituted phenoxy, $C_1$-$C_6$-alkylthio, phenylthio, $C_1$-$C_4$-alkylsulfonyl or phenylsulfonyl,

$R^3$ is cyano, $C_1$-$C_6$-alkoxycarbonyl, whose alkyl chain may be interrupted by one or more oxygen atoms, carbamoyl or $C_1$-$C_4$-monoalkyl- or -dialkyl-carbamoyl,

$R^4$ is $C_1$-$C_6$-alkyl which may be substituted by hydroxyl, $C_1$-$C_4$-alkoxy, cyano, $C_1$-$C_4$-

alkanoyloxy, $C_1$-$C_4$-alkoxycarbonyloxy, $C_1$-$C_4$-alkylaminocarbonyloxy, phenyl, $C_1$-$C_4$-alkoxycarbonyl or chlorine-, hydroxyl-, $C_1$-$C_4$-alkoxy- or phenoxy-substituted $C_1$-$C_4$-alkoxycarbonyl,

$R^5$ is hydrogen or $C_1$-$C_6$-alkyl which is substituted by phenyl, $C_1$-$C_4$-alkoxycarbonyl or chlorine-, hydroxyl-, $C_1$-$C_4$-alkoxy- or phenoxy- substituted $C_1$-$C_4$-alkoxycarbonyl,

X is hydrogen, $C_1$-$C_4$-alkyl, $C_1$-$C_4$-alkoxy, chlorine, bromine or the radical -NH-CO-$R^6$, where $R^6$ is $C_1$-$C_4$-alkyl, which may be substituted by $C_1$-$C_4$-alkoxy, phenoxy, cyano, hydroxyl, chlorine or $C_1$-$C_4$-alkanoyloxy, or is unsubstituted or $C_1$-$C_4$-alkoxy-substituted phenoxy and

Y is hydrogen, $C_1$-$C_4$-alkyl or $C_1$-$C_4$-alkoxy, and one or more dyes F whose absorption maximum is at a wavelength of from 390 to 520 nm, the proportion of the thiopheneazo dyes being from 60 to 99% by weight, based on the total weight of the thiopheneazo dyes and the dyes F in the mixture,

except dye mixtures comprising

a) the dyes

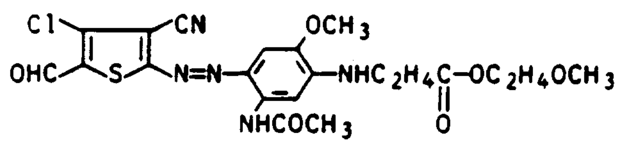

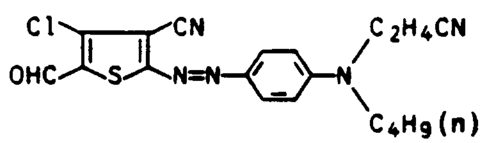

and C.I. Disperse Red 54 : 1 in a weight ratio of 33 : 4.25 : 2.75,

b) the dyes

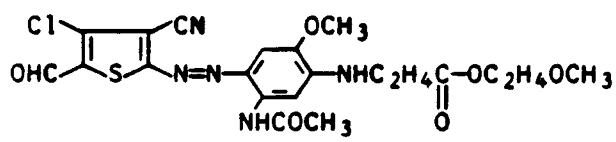

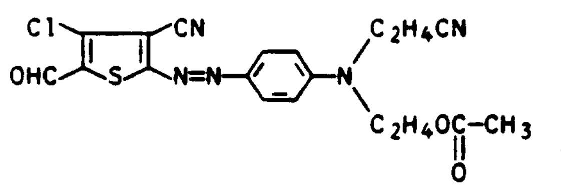

and C.I. Disperse Red 54 : 1 in a weight ratio of 31 : 6.3 : 2.7

c) the dyes

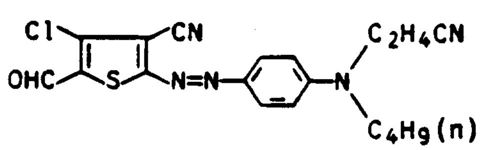

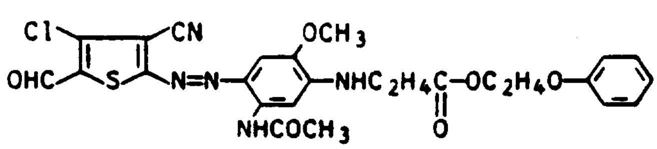

and C.I. Disperse Red 167 : 1 in a weight ratio of 6.25 : 33.2 : 0.55 and
d) the dyes

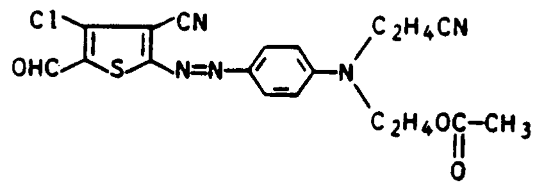

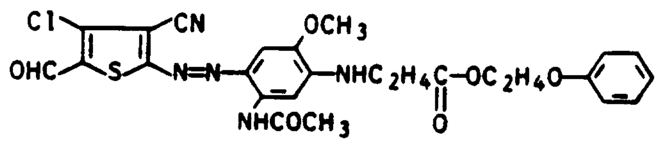

and C.I. Disperse Red 167 : 1 in a weight ratio of 8 : 31.6 : 0.4.

**2.** A dye mixture as claimed in claim 1, wherein $R^1$ is formyl, $R^2$ is chlorine and $R^3$ is cyano or $C_1$-$C_4$-alkoxycarbonyl.

**3.** A dye mixture as claimed in claim 1, wherein the dyes F are of the class of the monoazo or disazo dyes or of the class of the quinophthalone dyes.

**Revendications**

**1.** Mélanges de colorants bleu marine et noirs, contenant un ou plusieurs colorants azoïques de la famille du thiophène de formule

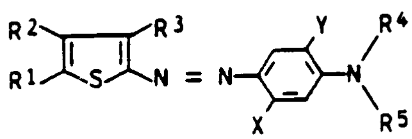
,

dans laquelle

- $R^1$ représente un reste formyle, cyano ou phénylsulfonyle
- $R^2$ représente un atome d'halogène ou un reste alcoxy en $C_1$-$C_8$, phénoxy éventuellement substitué, alkylthio en $C_1$-$C_6$, phénylthio, alkylsulfonyle en $C_1$-$C_4$ ou phénylsulfonyle.
- $R^3$ représente un reste cyano, (alcoxy en $C_1$-$C_4$)carbonyle dont la chaîne alkyle est éventuellement interrompue par un ou plusieurs atomes d'oxygène, carbamoyle ou mono- au di(alkyl en $C_1$-$C_4$)carbamoyle,
- $R^4$ représente un reste alkyle en $C_1$-$C_6$ qui est éventuellement substitué par un groupement hydroxy, alcoxy en $C_1$-$C_4$, cyano, alcanoyloxy en $C_1$-$C_4$, (alcoxy en $C_1$-$C_4$)carbonyloxy, (alkyl en $C_1$-$C_4$)aminocarbonyloxy, phényle, (alcoxy en $C_1$-$C_4$)carbonyle ou (alcoxy en $C_1$-$C_4$)-carbonyle substitué par un atome de chlore ou par un groupement hydroxy, alcoxy en $C_1$-$C_4$ ou phénoxy,
- $R^5$ représente un atome d'hydrogène ou un radical alkyle en $C_1$-$C_6$ qui est substitué par un groupement phényle, (alcoxy en $C_1$-$C_4$)carbonyle ou (alcoxy en $C_1$-$C_4$)carbonyle substitué par un atome de chlore ou un groupement hydroxy, alcoxy en $C_1$-$C_4$ ou phénoxy,
- X représente un atome d'hydrogène, un reste alkyle en $C_1$-$C_4$, alcoxy en $C_1$-$C_4$, un atome de chlore, de brome ou le reste -NH-CO-$R^6$, $R^6$ étant mis pour un radical alkyle en $C_1$-$C_4$, qui peut être substitué par un groupement alcoxy en $C_1$-$C_4$, phénoxy, cyano, hydroxy, un atome de chlore ou un groupement alcanoyloxy en $C_1$-$C_4$, ou pour un radical phénoxy éventuellement substitué par un groupement alcoxy en $C_1$-$C_4$,
- Y représente un atome d'hydrogène, un reste alkyle en $C_1$-$C_4$ ou alcoxy en $C_1$-$C_4$,

et un ou plusieurs colorants F dont le maximum d'absorption se situe à une longueur d'onde de 390 à 520 nm, la part des colorants azoïques de la famille du thiophène s'élevant à 60-99% en poids par rapport au poids total des colorants azoïques de la famille du thiophène et des colorants F dans le mélange, a l'exclusion de mélanges de colorants contenant

a) les colorants

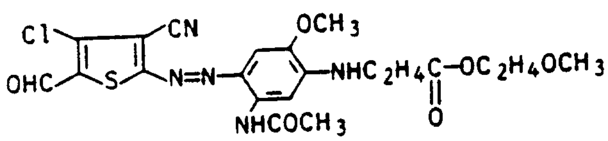

,

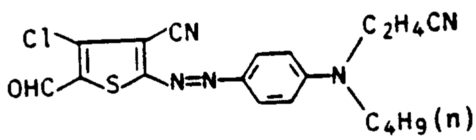

et C.I. Disperse Red 54:1, dans le rapport pondéral 33 : 4,25 : 2,75,

b) les colorants

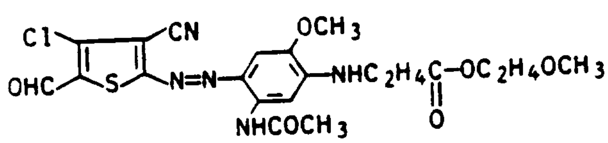

,

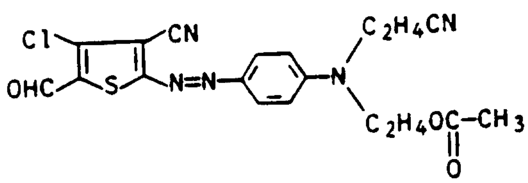

et C.I. Disperse Red 54:1, dans le rapport pondéral 31 : 6,3 : 2,7,

c) les colorants

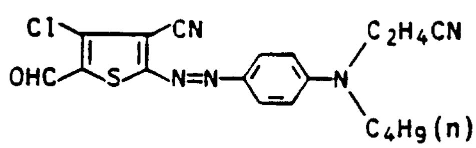

,

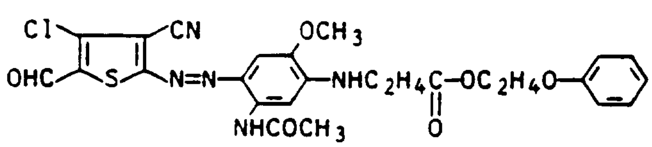

et C.I. Disperse Red 167:1, dans le rapport pondéral 6,25 : 33,2 : 0,55, et

d) les colorants

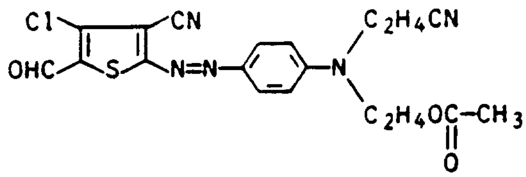

,

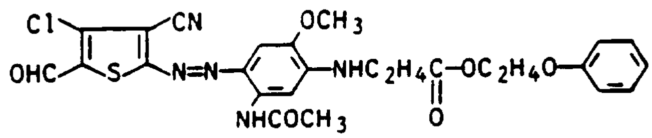

et C.I. Disperse Red 167:1, dans le rapport pondéral 8 : 31,6 : 0,4.

**2.** Mélanges de colorants selon la revendication 1, caractérises en ce que $R^1$ représente un reste formyle, $R^2$ un atome de chlore et $R^3$ un reste cyano ou (alcoxy en $C_{1-4}$)carbonyle.

**3.** Mélanges de colorants selon la revendication 1, caractérisés en ce qu'ils contiennent, en tant que colorants F, ceux qui proviennent de la classe des colorants mono- ou disazoïques ou des colorants de la famille de la quinophtalone.